# EUROPÄISCHE PATENTANMELDUNG

(11) **EP 3 148 059 A1**
(43) Veröffentlichungstag der Anmeldung: **29.03.2017**
(21) Anmeldenummer: 15003152.4
(22) Anmeldetag: 03.11.2015
(51) Int. Cl.: H02K 15/12

(54) **ANORDNUNG UND VERFAHREN ZUM IMPRÄGNIEREN EINES WICKLUNGSSTABES**

(30) Priorität: 28.09.2015 DE 102015012441
(71) Anmelder: PETT & P.E.T.T. Trade & Industry Products GmbH, 55288 Udenheim (DE)
(72) Erfinder: PETT, Bertram, 55288 Udenheim (DE)
(74) Vertreter: Von Rohr Patentanwälte Partnerschaft mbB

(57) **Zusammenfassung**

Dargestellt und beschrieben ist eine Anordnung (1) zum Imprägnieren eines Wicklungsstabes (2) für eine elektrische Maschine, mit einem wenigstens ein Werkzeugoberteil (3) und wenigstens ein Werkzeugunterteil (4) aufweisenden Werkzeug und mit wenigstens einem mit einer Isolation (5) umgebenen Wicklungsstab (2), wobei in einem geschlossenen Zustand des Werkzeugs zwischen den Werkzeugteilen (3, 4) eine Werkzeugkavität zur Aufnahme des Wicklungsstabes (2) gebildet wird und der Bereich, den die Isolation (5) einnimmt, evakuierbar und mit einem Imprägniermittel befüllbar ist und wobei die Werkzeugteile (3, 4) den Wicklungsstab (2) beim Evakuier- und Imprägniervorgang umschließen. Erfindungsgemäß ist innerhalb der Werkzeugkavität eine die Isolation (5) des Wicklungsstabes (2) umgebende vakuum- und druckdichte Hülle (6) vorgesehen.

## Beschreibung

Die Erfindung betrifft eine Anordnung zum Imprägnieren eines Wicklungsstabes für eine elektrische Maschine, mit einem wenigstens ein Werkzeugoberteil und wenigstens ein Werkzeugunterteil aufweisenden Werkzeug und mit wenigstens einem mit einer Isolation umgebenen Wicklungsstab, wobei in einem geschlossenen Zustand des Werkzeugs zwischen den Werkzeugteilen eine Werkzeugkavität zur Aufnahme des Wicklungsstabes gebildet wird und der Bereich, den die Isolation einnimmt, evakuierbar, d.h. mit einem Vakuum belegbar, und mit einem Imprägniermittel, wie einem Imprägnierharz, vorzugsweise mit einem vorgebbaren Druck, befüllbar ist und wobei die Werkzeugteile den Wicklungsstab beim Evakuier- und Imprägniervorgang zumindest bereichsweise, insbesondere an den Längsseiten, umschließen. Darüber hinaus betrifft die vorliegende Erfindung ein Verfahren zum Imprägnieren eines Wicklungsstabes unter Verwendung einer Anordnung der zuvor beschriebenen Art. Die Erfindung betrifft damit im Allgemeinen das Imprägnieren von Wicklungen für elektrische Maschinen.

Aus der EP 1 240 705 B1 ist ein Verfahren zum Imprägnieren eines mit einer Isolation versehenen Wicklungsstabes in einem mehrteiligen Werkzeug bekannt, wobei der Wicklungsstab bei dem Imprägnieren in einem zwischen zwei Werkzeugteilen gebildeten Werkzeugnest bzw. einer Werkzeugkavität aufgenommen ist. Das Werkzeug besteht aus einem Oberteil und einem Unterteil, die unter Zwischenschaltung einer umlaufenden Dichtung durch eine Schraubverbindung kraftschlüssig miteinander verbindbar sind. Das im geschlossenen Zustand des Werkzeugs gebildete Werkzeugnest umschließt für den Imprägniervorgang die Isolation des Wicklungsstabes unter Einhaltung eines vorgebbaren Spiels. Nach erfolgtem Evakuieren des Werkzeugnests mit Hilfe einer Absaugleitung wird über eine Zuführleitung ein Imprägnierharz in das Werkzeugnest eingespeist, bis die Isolation und deren Hohlräume imprägniert sind. Das Werkzeug ist während des Evakuiervorgangs und beim Befüllen mit Imprägnierharz vollständig geschlossen, so dass das Werkzeugnest mit einem Vakuum belegbar und der Austritt von Emissionen beim Imprägnieren vermieden wird.

Bei dem bekannten Verfahren ist ein druckdichtes Werkzeug erforderlich, um das Evakuieren der Werkzeugkavität zu ermöglichen und beim Imprägnieren den Austritt von Emissionen über die Werkzeugteile zu verhindern. Verschleiß und Beschädigungen der für die Ausbildung einer druckdichten Verbindung der Werkzeugteile vorgesehenen Dichtung können jedoch dazu führen, dass der Evakuiervorgang gestört wird und/oder es beim Imprägnieren zu einem Austritt von Imprägnierharz über die Werkzeugteile kommt. Ein Dichtungsaustausch führt zu einer Betriebsunterbrechung und trägt zu insgesamt höheren Kosten des Imprägniervorgangs bei.

Aufgabe der vorliegenden Erfindung ist es, eine Anordnung und ein Verfahren jeweils der eingangs genannten Art zur Verfügung zu stellen, die in einfacher Weise und bei geringen Werkzeug- und Betriebskosten einen ungestörten Betriebsablauf beim Evakuier- und Imprägniervorgang ermöglichen und den Austritt von Emissionen beim Imprägniervorgang wirkungsvoll verhindern.

Die vorgenannte Aufgabe wird durch eine Anordnung mit den Merkmalen von Patentanspruch 1 und durch ein Verfahren mit den Merkmalen von Patentanspruch 9 gelöst. Vorteilhafte Ausgestaltungen sind Gegenstand der Unteransprüche.

Erfindungsgemäß wird der Wicklungsstab für den Evakuier- und Imprägniervorgang mit einer die Isolation des Wicklungsstabes zumindest bereichsweise, insbesondere an den Längsseiten, umgebenden vakuum- und druckdichte Hülle versehen. Das erfindungsgemäße Verfahren sieht zur Lösung der vorgenannten Aufgabe dementsprechend vor, dass ein isolierter Wicklungsstab mit einer vakuum- und druckdichten Hülle umgeben und in die Werkzeugkavität einbracht wird und dass anschließend der Innenraum der Hülle evakuiert und mit einem Imprägnierharz befüllt wird.

Der Innenbereich zwischen der Hülle und dem Wicklungsstab, der im Wesentlichen gleichzusetzen ist mit dem Raum, den die Isolation einnimmt, ist bei der erfindungsgemäßen Anordnung über wenigstens eine Evakuierleitung mit einem Vakuum belegbar und über wenigstens eine Imprägniermittelleitung mit einem Imprägniermittel, vorzugsweise mit einem vorgebbaren Druck, befüllbar. Die Hülle ist vakuum- und druckdicht und ermöglicht damit in einfacher Weise und kostengünstig das Evakuieren der Isolation und das Imprägnieren der Isolation bei einem bestimmten Druck des Imprägniermittels.

Aufgrund der Umhüllung der Isolation lassen sich beim Imprägniervorgang Emissionen sicher ausschließen. Dadurch entfällt auch die Notwendigkeit, die Werkzeugteile im geschlossenen Zustand des Werkzeugs für den Evakuier- und Imprägniervorgang druckdicht miteinander zu verbinden.

Erfindungsgemäß ist im Ergebnis kein druckdichtes Werkzeug erforderlich, um das Evakuieren der Isolation zu ermöglichen und das Imprägniermittel diesem Raum unter einem bestimmten Druck zuzuführen. Die nicht druckdichte Ausbildung des Werkzeugs vereinfacht den konstruktiven Aufbau des Werkzeugs, was zu einer Einsparung bei den Werkzeugkosten führt. Durch die Verwendung einer vakuum- und druckdichten Hülle für den isolierten Wicklungsstab lassen sich Störungen des Betriebsablaufs beim Evakuier- und Imprägniervorgang, wie sie bei dem aus der EP 1 240 705 B1 bekannten Werkzeug aufgrund beschädigter Dichtungen auftreten können, sicher vermeiden. Der Betriebsablauf wird vereinfacht und die Betriebskosten werden gesenkt.

Die nicht druckdichte Verbindung der Werkzeugteile kann insbesondere derart ausgebildet sein, dass ein ungehinderter Gas- und/oder Luftaustausch zwischen der Werkzeugkavität und der Umgebung des Werkzeugs über die Werkzeugteile im geschlossenen Zustand des Werkzeugs möglich ist. Das Imprägniermittel wird in den Innenraum der Hülle entsprechend dem beim Evakuiervorgang erzeugten Unterdruck und, vorzugsweise zusätzlich, unter Druck, beispielsweise mittels Stickstoff, eingespeist. Beim Imprägnieren der Isolation liegt der Druck innerhalb der Hülle dann über dem umgebenden Druck außerhalb der Hülle.

Eine besonders bevorzugte Ausführungsform der Erfindung sieht vor, durch Anpressen der Werkzeugteile an die Hülle und die Isolation des Wicklungsstabes eine hohe Passgenauigkeit des Wicklungsstabes beim Imprägnieren zu gewährleisten. In diesem Zusammenhang kann die Isolation beim Schließen des Werkzeugs und vor der Imprägnierung durch die Werkzeugteile auf ein Nenn-Endmaß des isolierten und imprägnierten Wicklungsstabes vorgepresst werden. Im geschlossenen Zustand des Werkzeugs können die Werkzeugteile im Wesentlichen spielfrei gegen die Hülle anliegen. Verfahrensgemäß ist dementsprechend vorgesehen, dass die Isolation zusammen mit der Hülle beim Schließen des Werkzeugs auf ein Nenn-Endmaß des Wicklungsstabes vorgepresst und dann imprägniert wird.

Das Evakuieren des Innenraums und/oder die Zufuhr des Imprägniermittels zum Innenraum kann vorzugsweise über eine oder beide Stirnseiten des Wicklungsstabes, d.h. über die Enden des Stabes, erfolgen. Eine Umhüllung des Wicklungsstabes mit der vakuum- und druckdichten Hülle ist dann lediglich an den Längsseiten des Wicklungsstabes vorgesehen, während stirnseitig keine Umhüllung vorgesehen ist. Das Werkzeug kann dazu im Bereich der beiden Enden des Wicklungsstabes offen ausgebildet sein und entsprechende Verbindungsleitungen zu einer vakuumbildenden Anlage und/oder zu einer Zuführeinrichtung für das Imprägniermittel aufweisen. Die Enden des Wicklungsstabes werden dann separat abgedichtet, um eine insgesamt druck- und vakuumdichte Umhüllung des Wicklungsstabes zu erreichen und damit das Evakuieren des Innenraums der Hülle, den die Isolation einnimmt, zu ermöglichen und den Austritt von Emissionen beim Imprägniervorgang sicher zu verhindern.

Um eine vakuum- und druckdichte Hülle auszubilden, kann die Isolation des Wicklungsstabes mit einem Kunststoffband umwickelt werden. Hierbei kann sich das Kunststoffband einfach oder mehrfach überlappen bzw. überlagern und hierzu einfach oder mehrfach um den Wicklungsstab gewickelt sein. Vorzugsweise ist vorgesehen, dass der Überlappungsgrad benachbarter Abschnitte des Kunststoffbandes zwischen 40 % und 60 % der Bandbreite beträgt, vorzugsweise ca. 50 %. Damit lässt sich eine hohe Vakuum- und Druckdichtheit erreichen, wobei die Anzahl der Umwicklungen des Wicklungsstabes und/oder der Überlappungsgrad benachbarter Bandabschnitte bedarfsweise in Abhängigkeit von den mechanischen Eigenschaften des Kunststoffbandes und von dessen Durchlässigkeit für Gase gewählt wird. In diesem Zusammenhang sollte die Umhüllung mit dem Kunststoffband eine Vakuum- und Druckdichtheit bis wenigstens 6 bar, vorzugsweise bis wenigstens 8 bar, insbesondere bis wenigstens 10 bar, sicherstellen.

Die Reisdehnung (Elongation at Break) des Kunststoffbandes nach ASTM-D-1000-76 kann vorzugsweise im Bereich zwischen 300 % bis 600 %, insbesondere zwischen 400 % und 500 % liegen, oder auch darüber, was das Umwickeln der Isolation vereinfacht und sicherstellt, dass sich das Kunststoffband aufgrund von elastischen Rückstellkräften möglichst eng an die Isolation anlegt. Die Zugfestigkeit des Kunststoffbandes nach DIN EN 60454-2 kann zwischen 2 N/mm² und 10 N/mm², vorzugsweise zwischen 4 N/mm² und 8 N/mm², liegen und, weiter vorzugsweise, ca. 6 N/mm², betragen.

Die Dicke des Kunststoffbandes kann im Bereich von 0,1 mm bis 1,0 mm, vorzugsweise von 0,2 mm bis 0,5 mm, insbesondere von 0,3 mm bis 0,4 mm, liegen.

Das Kunststoffband ist vorzugsweise bis zu einer Temperatur von wenigstens 200 °C temperaturbeständig, weiter vorzugsweise bis wenigstens 250 °C. Das Kunststoffband muss beständig gegen das Imprägnierharz sein und sich nach der Imprägnierung vorzugsweise ohne Rückstände von der Isolation entfernen lassen. Insbesondere ist das Kunststoffband selbstverschweißend, was die Ausbildung einer vakuum- und druckdichten Hülle beim Umwickeln der Isolation des Leiterstabes vereinfacht. Unter einem "selbstverschweißenden Kunststoffband" im Sinne der Erfindung wird ein Kunststoffband verstanden, das reaktive Gruppen an wenigstens einer Oberfläche aufweist, die in der Lage sind, mit weiteren funktionellen Gruppen und/oder mit sich selber zu reagieren, vorzugsweise ohne Zufuhr von thermischer Energie und/oder weiterer Reaktionspartner. Grundsätzlich kann jedoch auch eine thermische Energiezufuhr (Strahlung, Umgebungswärme) und/oder die Zufuhr wenigstens eines Reaktionspartners erforderlich sein, um eine Reaktion zwischen den Gruppen zu bewirken.

Darüber hinaus können auch nicht-selbstverschweißende Kunststoffbänder eingesetzt werden, wobei das Kunststoffband zur Ausbildung einer vakuum- und druckdichten Hülle wenigstens einseitig eine Klebstoffbeschichtung aufweisen kann, um überlappende Bereiche des Kunststoffbandes miteinander druckdicht zu verbinden. Eine druckdichte Verbindung zwischen überlappenden Bereichen benachbarter Abschnitte des Kunststoffbandes kann bei nicht selbstverschweißenden Kunststoffbändern auch allein über Adhäsionskräfte erreicht werden.

In Zusammenhang mit der Erfindung durchgeführte Versuche haben gezeigt, dass insbesondere Kunststoffbänder, die Silikon aufweisen und/oder aus Silikon bestehen, zur Ausbildung einer hoch vakuum- und druckdichten Hülle mit hervorragenden mechanischen Eigenschaften geeignet sind.

Das Silikonband kann Verstärkungs-/Versteifungskomponenten und/oder Füllstoffe aufweisen. Als Silikonband kann beispielsweise ein Fiberglas-Substrat mit einer Beschichtung aus Silikon-Elastomer eingesetzt werden. Hierdurch wird eine besonders hohe mechanische Belastbarkeit des Bandes erreicht. Weitere geeignete Silikonbänder, die im Rahmen der Erfindung zur Ausbildung einer vakuum- und druckdichten Hülle eingesetzt werden können, sind beispielsweise in der US 2004/0098841 A1 und der US 2010/0199465 A1 beschrieben. Auf den Offenbarungsgehalt der vorgenannten Druckschriften wird Bezug genommen. Bei im Rahmen der Erfindung durchgeführten Versuchen haben sich beispielsweise auch Bänder vom Typ "66 N", "67 N" und "68 N" von Raytronics, "Scotch 70" von 3M und Silikonbänder vom Typ "Tesa 4.600 Xtreme Conditions" als besonders geeignet erwiesen.

Grundsätzlich können auch Kautschukbänder eingesetzt werden, um eine vakuum- und druckdichte Hülle auszubilden, beispielsweise Bänder aus synthetischem Kautschuk, aus PP-Kautschuk, aus Silikon-Kautschuk, aus EP-Kautschuk oder deren Mischungen. Geeignete Kautschukbänder sind beispielsweise unter den Bezeichnungen "Scotch 13", "Scotch 23", "Scotch 130 C" und "Scotchfil" von 3M erhältlich.

Die vorgenannten Aspekte und Merkmale der vorliegenden Erfindung sowie die nachfolgend beschriebenen Aspekte und Merkmale der vorliegenden Erfindung können unabhängig voneinander, aber auch in einer beliebigen Kombination realisiert werden.

Weitere Vorteile, Merkmale, Eigenschaften und Aspekte der vorliegenden Erfindung ergeben sich aus der folgenden Beschreibung einer bevorzugten Ausführungsform anhand der Zeichnung. Es zeigen
- Fig. 1: eine schematische Querschnittsansicht einer erfindungsgemäßen Anordnung zum Imprägnieren eines Wicklungsstabes mit einem ein Werkzeugoberteil und ein Werkzeugunterteil aufweisenden Werkzeug und
- Fig. 2: eine schematische Teilansicht eines Endabschnitts des Wicklungsstabes nach dem Einlegen in ein Werkzeugunterteil des Werkzeugs.

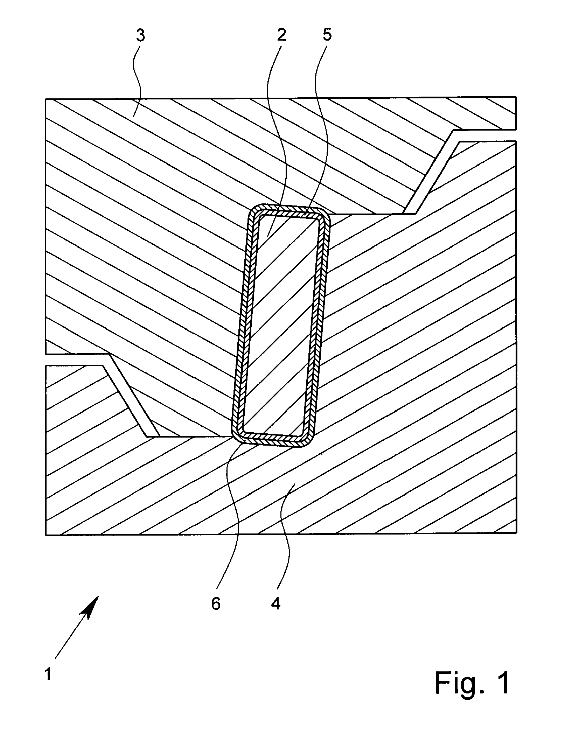

In Fig. 1 ist eine Anordnung 1 zum Imprägnieren eines Wicklungsstabes 2 für eine elektrische Maschine gezeigt, wobei die Anordnung 1 ein Werkzeug mit einem Werkzeugoberteil 3 und einem Werkzeugunterteil 4 sowie, gegebenenfalls, mit weiteren nicht gezeigten Werkzeugteilen aufweist. Fig. 1 zeigt das Werkzeug im geschlossenen bzw. miteinander verbundenen Zustand der Werkzeugteile 3, 4. Im geschlossenen Zustand des Werkzeugs wird zwischen den Werkzeugteilen 3, 4 eine Werkzeugkavität zur Aufnahme eines Wicklungsstabes 2 gebildet. Der Wicklungsstab 2 weist eine Isolation 5 auf, die beispielsweise durch eine Umwicklung mit einem Glasfaserband gebildet sein kann.

Das Werkzeug kann insbesondere der in der WO 2015/055265 A2 beschriebenen Vorrichtung zum Imprägnieren von Wicklungsstäben für elektrische Maschinen entsprechen. Der Verfahrensablauf beim Imprägnieren von Wicklungsstäben 2 mit dem Werkzeug kann entsprechend dem Imprägnierverfahren erfolgen, das in der WO 2015/055265 A2 beschrieben ist. Auf den Offenbarungsgehalt der WO 2015/055265 A2 wird Bezug genommen.

Die erfindungsgemäße Anordnung weist innerhalb der Werkzeugkavität eine die Isolation 5 des Wicklungsstabes 2 umgebende vakuum- und druckdichte Hülle 6 auf. Die Hülle 6 wird gebildet durch ein um die Isolation 5 des Wicklungsstabes 2 gewickeltes selbstverschweißendes Silikonband.

Die Hülle 6 ermöglicht es, den von der Isolation 5 ausgefüllten Innenraum der Hülle 6 mit einem Vakuum zu belegen und die Isolation 5 bei einem bestimmten vorgebbaren Druck des Imprägniermittels zu imprägnieren, ohne dass es zu einem Austritt von Emissionen während des Imprägniervorgangs kommen kann.

Die Werkzeugteile 3,4 sind im geschlossenen Zustand des Werkzeugs nicht druckdicht miteinander verbunden. In Abkehr von dem aus der EP 1 240 705 B1 bekannten Werkzeug ist zwischen den Werkzeugteilen 3, 4 kein Dichtmittel vorgesehen. Bei der in Fig. 1 gezeigten Ausführungsform kann über die Werkzeugteile 3,4 im geschlossenen Zustand des Werkzeugs ein freier Gas- und/oder Luftaustausch zwischen der Werkzeugkavität und der Umgebung des Werkzeugs erfolgen, was zu einer Vereinfachung des konstruktiven Aufbaus des Werkzeugs und zu einer Vereinfachung des Imprägnierverfahrens verbunden mit einer Einsparung bei den Werkzeugkosten und den Imprägnierkosten führt.

Wie sich weiter aus Fig. 1 ergibt, wird die Isolation 5 zusammen mit der Hülle 6 im geschlossenen Zustand des Werkzeugs, d.h. beim Schließen des Werkzeugs und vor der Imprägnierung, durch die Werkzeugteile 3, 4 auf ein Nenn-Endmaß des isolierten und imprägnierten Wicklungsstabes 2 vorgepresst. Damit wird eine hohe Passgenauigkeit des Wicklungsstabes 2 erreicht. Die Werkzeugteile 3, 4 liegen hierbei im geschlossenen Zustand des Werkzeugs im Wesentlichen spielfrei gegen die Hülle 6 an.

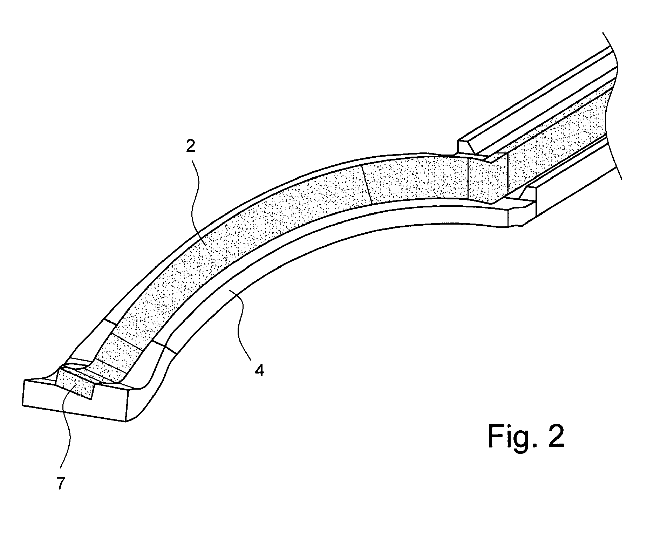

Fig. 2 zeigt den Wicklungsstab 2 nach dem Einsetzen in das Werkzeugunterteil 4. Die Evakuierung des Innenraums der Hülle 6, der dem von der Isolation 5 eingenommenen Raum entspricht, d.h. das Belegen mit einem Vakuum, und/oder die Zufuhr des Imprägniermittels erfolgt über eine Stirnseite 7 des Wicklungsstabes 2 an einem oder beiden Enden des Wicklungsstabes 2, wobei die Hülle 6 an den Enden des Wicklungsstabes 2 entsprechend abgedichtet sein kann, um die Vakuum- und Druckdichtheit zu gewährleisten. Das Evakuieren und die Zufuhr des Imprägniermittels erfolgen dabei über wenigstens eine nicht dargestellte Leitungsverbindung zwischen dem Innenraum der Hülle 6 und einer nicht dargestellten vakuumbildenden Anlage oder einem Behälter für das Imprägniermittel.

### Bezugszeichenliste:

- 1: Anordnung
- 2: Wicklungsstab
- 3: Werkzeugoberteil
- 4: Werkzeugunterteil
- 5: Isolation
- 6: Hülle
- 7: Stirnseite

## Patentansprüche

1. Anordnung (1) zum Imprägnieren eines Wicklungsstabes (2) und/oder einer Wicklung für eine elektrische Maschine, mit einem wenigstens ein Werkzeugoberteil (3) und wenigstens ein Werkzeugunterteil (4) aufweisenden Werkzeug und mit wenigstens einem mit einer Isolation (5) umgebenen Wicklungsstab (2), wobei in einem geschlossenen Zustand des Werkzeugs zwischen den Werkzeugteilen (3, 4) eine Werkzeugkavität zur Aufnahme des Wicklungsstabes (2) gebildet wird und der Bereich, den die Isolation (5) einnimmt, evakuierbar und mit einem Imprägniermittel befüllbar ist und wobei die Werkzeugteile (3, 4) den Wicklungsstab (2) beim Evakuier- und Imprägniervorgang umschließen, **dadurch gekennzeichnet, dass** innerhalb der Werkzeugkavität eine die Isolation (5) des Wicklungsstabes (2) umgebende vakuum- und druckdichte Hülle (6) vorgesehen ist.

2. Anordnung (1) nach Anspruch 1, **dadurch gekennzeichnet, dass** die Werkzeugteile (3, 4) im geschlossenen Zustand des Werkzeugs nicht druckdicht miteinander verbunden sind.

3. Anordnung (1) nach einem der Ansprüche 1 oder 2, **dadurch gekennzeichnet, dass** die Isolation (5) im geschlossenen Zustand des Werkzeugs durch die Werkzeugteile (3, 4) auf ein Nenn-Endmaß vorgepresst wird.

4. Anordnung (1) nach einem der vorhergehenden Ansprüche, **dadurch gekennzeichnet, dass** die Werkzeugteile (3, 4) im geschlossenen Zustand des Werkzeugs im wesentlichen spielfrei gegen die Hülle (6) anliegen.

5. Anordnung (1) nach einem der vorhergehenden Ansprüche, **dadurch gekennzeichnet, dass** das Evakuieren des Innenraums der Hülle (6) und/oder die Zufuhr des Imprägniermittels zum Innenraum über wenigstens eine Stirnseite (7) des Wicklungsstabes (2) erfolgt.

6. Anordnung (1) nach einem der vorhergehenden Ansprüche, **dadurch gekennzeichnet, dass** die Hülle (6) durch ein um die Isolation (5) des Wicklungsstabes (2) gewickeltes, insbesondere elastisches, Kunststoffband gebildet ist.

7. Anordnung (1) nach einem der vorhergehenden Ansprüche, **dadurch gekennzeichnet, dass** das Kunststoffband selbstverschweißend ist.

8. Anordnung (1) nach einem der vorhergehenden Ansprüche, **dadurch gekennzeichnet, dass** das Kunststoffband Silikon aufweist und/oder aus Silikon besteht.

9. Verfahren zum Imprägnieren eines Wicklungsstabes (2) und/oder einer elektrischen Wicklung einer elektrischen Maschine unter Verwendung einer Anordnung (1) nach einem der vorhergehenden Ansprüche, **dadurch gekennzeichnet, dass** ein isolierter Wicklungsstab (2) mit einer vakuum- und druckdichten Hülle (6) umgeben und in die Werkzeugkavität eingebracht wird und dass der Innenraum der Hülle (6) nach dem Schließen des Werkzeugs evakuiert und mit einem Imprägnierharz befüllt wird.

10. Verfahren nach Anspruch 9, **dadurch gekennzeichnet, dass** die Isolation (5) beim Schließen des Werkzeugs auf ein Nenn-Endmaß des Wicklungsstabes (2) vorgepresst und im vorgepressten Zustand imprägniert wird.
